Europäisches Patentamt

**European Patent Office**

Office européen des brevets

(19)

(11) Numéro de publication: **0 253 695 B1**

(12)

# FASCICULE DE BREVET EUROPEEN

(45) Date de publication de fascicule du brevet:
**10.04.91**

(51) Int. Cl.⁵: **A23B 4/06**, A23L 1/317

(21) Numéro de dépôt: **87401387.3**

(22) Date de dépôt: **19.06.87**

(54) **Procédé de traitement des foies d'animaux pour l'obtention de portions normalisées, fraîches, surgelées ou cuites.**

(30) Priorité: **30.06.86 FR 8609425**

(43) Date de publication de la demande:
**20.01.88 Bulletin 88/03**

(45) Mention de la délivrance du brevet:
**10.04.91 Bulletin 91/15**

(84) Etats contractants désignés:
**AT BE DE FR GB GR IT NL**

(56) Documents cités:

| | |
|---|---|
| CH-A- 475 722 | DE-A- 3 143 755 |
| FR-A- 449 709 | FR-A- 904 818 |
| US-A- 1 943 019 | US-A- 2 052 221 |
| US-A- 2 137 897 | US-A- 2 204 459 |
| US-A- 2 521 849 | US-A- 2 852 395 |
| US-A- 2 993 795 | US-A- 2 995 452 |
| US-A- 3 573 067 | US-A- 4 271 148 |

(73) Titulaire: **Archaimbault, Pierre**

**F-79370 Celles sur Belle(FR)**

(72) Inventeur: **Archaimbault, Pierre**

**F-79370 Celles sur Belle(FR)**

(74) Mandataire: **Tony-Durand, Serge**
**Cabinet Tony-Durand 77, rue Boissière**
**F-75116 Paris(FR)**

Rank Xerox (UK) Business Services

## Description

La présente invention est relative à une procédé de traitement des foies d'animaux pour l'obtention de portions normalisées, en poids et en épaisseur, et elle a également pour objet les portions ainsi réalisées.

On sait que le foie animal, et plus particulièrement celui de jeunes bovins, est un abat riche en protéines ainsi qu'en vitamines, et qui présente une très faible teneur en matière grasse. Le foie est donc d'un intérêt nutritionnel évident : mais du fait même de sa nature et de sa conformation, il est d'un emploi difficile.

En effet, le tranchange du foie ne peut être réalisé que par un personnel qualifié. Or, pour que le foie puisse conserver ses propriétés nutritionnelles et toutes ses qualités gustatives, il doit être consommé peu après le tranchage. Ceci exclut donc toute possibilité de stockage intermédiaire pendant une certaine durée, tout au moins si l'on désire fournir à la consommation des tranches de foie ayant conservé toutes leurs qualités.

Par ailleurs, malgré son exécution par un personnel qualifié, l'opération de tranchage ne permet d'obtenir que des tranches inégales en poids, en épaisseur et en dimension, et ce du fait même de la forme particulière du foie d'animal. Or cette inégalité des portions ainsi obtenues constitue une difficulté, sinon un obstacle, pour la présentation et la consommation des foies dans des restaurants de collectivités, tels que des restaurants scolaires ou des restaurants d'entreprises.

Pour essayer de remédier à cette situation, il a déjà été proposé de faire subir, à des foies d'animaux, une opération de formage sous pression hydraulique pour leur donner la forme d'un bloc de dimension régulière pouvant être tranché en portions à peu près égales, les foies tranchés ainsi réalisés étant stockés et livrés sous forme de tranches congelées. Cependant cette technique a l'inconvénient de restituer un produit asséché par perte d'un exsudat important, ce qui entraîne aussi une perte de poids appréciable. De plus, cette technique ne permet pas de conserver les quantités gustatives et nutritionnelles inhérentes aux foies d'animaux.

Par ailleurs, il n'est pas possible d'envisager de faire subir aux foies d'animaux un traitement qui correspondrait en quelque sorte à une transposition de la technique utilisée pour la préparation de portions reconstituées de viande hachée. En effet, le foie d'un animal présente des caractéristiques biochimiques très différentes de celles de la viande de muscle, ce qui exclut de pouvoir travailler les foies d'une façon similaire.

Ainsi, une viande musculaire est constituée de fibres semi-rigides, ce qui confère une certaine tenue au produit obtenu après son hachage. Or, pour sa part le foie ne comporte pas une telle structure. Par ailleurs, le hachage de la viande musculaire peut être effectué facilement, sans précaution particulière, dans un hachoir ou un appareil de coupe dénommé "cutter", ce qui n'est pas possible dans le cas du foie, car on obtiendrait alors une pâte onctueuse similaire aux mêlées de paté de foie, et tout à fait inutilisable pour l'emploi envisagé.

D'autre part, en raison de la composition biochimique du foie et en particulier de la présence de glucides, les températures de travail observées pour la préparation de la viande hachée et reconstituée ne peuvent absolument pas convenir pour la préparation de portions reconstituées de foie préalablement destructuré.

De plus, la présence de sucres dans le foie soulève un problème particulier. En effet, lors d'une opération de destructuration d'un foie il y a, en raison de l'éclatement des cellules, libération des sucres, qui sont en solution colloïdale dans le cytoplasme. Il y a également augmentation de la surface de contact à l'oxygène du fait de la division de la masse originelle. Il en résulte une oxydation qui se manifeste aussi bien au coeur du produit destructuré qu'en surface de celui-ci, ce qui aboutit, lors de la cuisson, à un changement rapide de couleur avec un virage au vert. Cette couleur verte est le résultat d'une réduction, puis d'une oxydation de certains composés contenus dans les globines du foie. Or, ces phénomènes seraient absolument inévitables si l'on cherchait à transposer pour les foies la technique de préparation des viandes reconstituées après hachage, ce qui serait du reste par ailleurs impossible pour les raisons exposées précédemment.

Ces mêmes inconvénients se retrouvent dans le procédé de traitement qui fait l'objet du brevet US 2.993.795 et qui concerne le traitement de foies d'animaux pour la réalisation de pâtés de foies. Selon ce procédé, les foies à traiter subissent une opération de fragmentation - par broyage, découpage ou hachage - alors qu'ils sont congelés sous forme solide, par exemple à une température inférieure à -18°C. Ensuite, les fragments obtenus sont tassés dans un boyau à saucisse, ou toute autre conteneur de dimensions aquédates, pour obtenir une sorte de pain de foie destiné à être ensuite découpé en tranches individuelles ayant l'épaisseur désirée.

Le fait de procéder à la fragmentation du foie alors qu'il se trouve solidifié par congélation, permet de résoudre la première difficulté rencontrée pour le traitement des foies d'animaux. Par contre, le procédé faisant l'objet de ce brevet américain ne permet pas d'éliminer l'inconvénient majeur rencontré lors du traitement de tels foies, à savoir le verdissement du produit lors de sa cuisson, ce verdissement étant dû à l'oxydation de certains composés contenus dans les globines du foie. Or le verdissement du produit obtenu est un élément de nature à rendre complètement impossible la commercialisation de celui-ci.

Le brevet US 4.271.148 décrit un autre procédé de traitement de foies d'animaux. Ce procédé consiste à cuire "légèrement" le foie d'animal à traiter et ce, dans une marmite sous pression. Puis on effectue une congélation et le foie est ensuite fragmenté sous forme de grains, tels que des grains de riz. Le produit obtenu est ensuite desséché sous vide et on effectue un broyage pour obtenir des grains tels que ceux du sucre en poudre. Ces grains subissent ensuite un nouveau traitement sous pression accompagné éventuellement d'un traitement d'irridiation. Puis le produit obtenu peut être conservé sous forme de grains placés dans des capsules, ou bien compacté sous forme de tablettes.

Toutefois un tel procédé a l'inconvénient de restituer un produit asséché par perte d'un exsudat important lors du dessèchement sous vide, ce qui entraîne une perte de poids importante. Par ailleurs ce procédé ne permet pas de conserver les qualités gustatives et nutritionnelles inhérentes aux foies d'animaux.

C'est pourquoi la présente invention a pour but de réaliser un procédé de traitement des foies d'animaux qui est conçu de façon a éviter les inconvénients des divers procédés rappelés ci-dessus et surtout à éliminer tous risques de verdissement du produit lors de sa cuisson.

Cependant ce procédé est également conçu pour permettre la réalisation de portions individuelles, normalisées en poids et en épaisseur, dans lesquelles le produit obtenu a conservé la totalité des éléments nutritifs et gustatifs de la matière première brute, ainsi que l'onctuosité d'un foie entier.

A cet effet, l'invention a pour objet un procédé de traitement de foies d'animaux, dans le cadre duquel ceux-ci subissent une opération initiale de fragmentation alors qu'ils sont à l'état congelé, ainsi qu'une opération finale de moulage, et qui est caractérisé en ce que :

a) l'opération initiale de fragmentation, effectuée à une température de -6°C (ou + ou -2), est suivie d'une opération de coupe des fragments obtenus, et ce sous forme de lamelles ou particules similaires, qui sont maintenues à une température de l'ordre de -5°C (+ ou - 2),

b) on procède ensuite à une opération de malaxage sous vide des particules ainsi obtenues, tout en ajoutant un ou plusieurs produits additifs - tels que fecule, gelatine ou flocon de pomme de terre - ayant un effet de liants aptes à éviter la présence de poches ou bulles d'air à l'intérieur de la pâte ainsi obtenue, la température de cette pâte étant de -4°C (+ ou - 2),

c) puis après subdivision de cette pâte en parts individuelles de volume déterminé, on effectue le formage de chacune de celles-ci dans des moules de forme voulue, en contrôlant que la température du produit soit de l'ordre de -3°C ( + ou - 2).

Suivant le mode prévu de commercialisation, les parts normalisées ainsi obtenues peuvent être ensuite commercialisées à l'état frais, ou à l'état cuit. Cependant, elles peuvent également faire l'objet d'une surgélation immédiate pour être commercialisées sous forme surgelée.

Du fait des caractéristiques propres au présent procédé, et tout particulièrement à la réalisation d'un malaxage sous vide avec adjonction de produits ayant un effet de liant, on évite la présence de poches ou de bulles d'air à l'intérieur de la pâte obtenue. En conséquence, ceci élimine tout risque d'oxydation de certains des composés obtenus dans les globines du foie, et qui serait dû justement à la présence des poches ou des bulles d'air à 1'intérieur de la masse de l'ensemble, comme cela peut être le cas avec les procédés antérieurement connus. Ainsi ce procédé permet de réaliser la destructuration des foies d'animaux et leur reconstitution sous forme de portions normalisées, et ce malgré les difficultés résultant des caractéristiques très particulières d'un foie. De plus, ce procédé permet effectivement d'obtenir des portions normalisées dans lesquelles le produit de base a conservé toutes ses qualités.

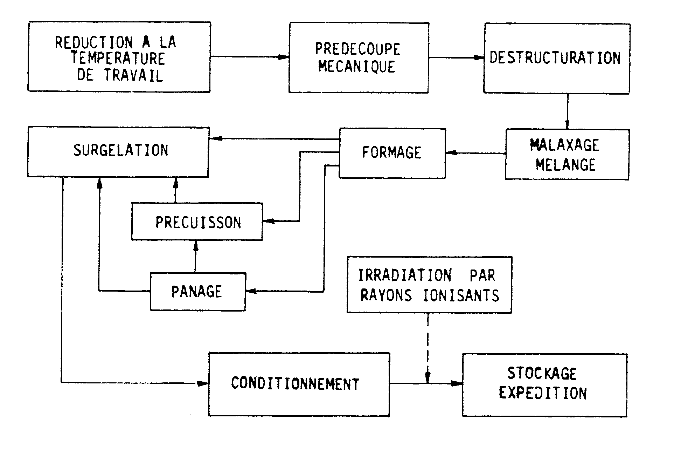

Cependant, d'autres particularités et avantages du procédé de traitement selon l'invention apparaîtront au cours de la description suivante d'un exemple de mise en oeuvre de ce procédé et des variantes de celui-ci. Cette description est donnée en référence au dessin annexé sur lequel :

La figure unique est un diagramme représentant la succession des différentes opérations prévues pour la mise en oeuvre du présent procédé.

Celui-ci est susceptible de s'appliquer à toutes sortes de foies d'animaux, aussi bien des foies de volailles que des foies ovins, bovins, caprins ou porcins.

La mise en oeuvre de ce procédé implique l'exécution successive des opérations suivantes:

**1.- Réduction de la température de travail :**

Les foies d'animaux utilisés comme matière première étant habituellement stockés dans des chambres froides à des températures de l'ordre de -18°C, la première opération à effectuer est de les amener à une température permettant un travail correct de destructuration, en l'occurrence une température d'environ -6°C (+ ou - 2).

Cette modification de température doit être réalisée dans une chamre réfrigérée à température dirigée, de façon que l'ensemble de la matière première atteigne dans le même temps la température voulue, c'est-à-dire environ -6°C. Cependant cette modification de température peut également être réalisée dans un four à micro-ondes.

## 2.- Première découpe mécanique :

Après la première opération mentionnée ci-dessus, on fait subir à chaque foie une première opération de découpe mécanique pour le réduire en fragments de dimensions restreintes, de préférence en fragments cubiques dont les arêtes ont une longueur de 2 à 5 cm environ. Cette opération est effectuée sans intervention manuelle avec un appareil de découpe du type trancheur ou guillotine.

Il faut observer que cette opération s'effectue sans modification sensible de la température du produit.

## 3.- Destructuration :

Cette opération est effectuée en continu sans rupture de cadence. Elle pour but de destructurer le produit en le découpant sous forme de fines lamelles ou de copeaux de très faibles dimensions. Un tel mode de découpe a pour avantage de retenir, dans ces lamelles, le jus et les sucs dans lesquels est concentrée la saveur du produit. Par ailleurs, de telles lamelles, qui sont proches de la texture naturelle du foie avant destructuration, ne risquent pas de s'émietter et elles conservent toute l'onctuosité du foie ainsi que ses qualitiés organo-leptiques.

Pour la réalisation de cette opération de destructuration, il convient d'utiliser un apareil de découpe de type très particulier, en l'occurrence un appareil comportant une tête rotative de coupe à lames multiples.

Les expériences réalisées on permis de constater que d'excellents résultats sont obtenus avec l'appareil commercialisé par la Aociété URSCHELL sous la marque "COMITROL", et plus précisément avec un tel appareil comportant une tête de coupe du type 3J 030750 ou type 3K 030240 U. Cette tête de coupe de 750/1000 d'ouverture peut être remplacée par une tête de 510/1000. Le temps de travail et la granulométrie seront alors différents mais il s'agit là d'un choix à faire en fonction des données commerciales et économiques.

A l'issue de cette destructuration, la température du produit obtenu, en l'occurrence des lamelles de foie, doit être de l'ordre de -5°C avec le même intervalle de tolérance de + ou - 2°C.

## 4.- Malaxage sous vide et adjonction d'additifs à effet de liants:

Les lamelles résultant de l'opération précédente font ensuite l'object d'un malaxage dans un appareil malaxeur. Cependant ce traitement doit être effectué, non pas à la pression atmosphérique, mais sous vide, ce qui est essentiel pour l'obtention du résultat désiré.

De plus, cette opération s'accompagne de l'adjonction d'un ou plusieurs produits à effet de liants. L'addition de ces produits a pour but d'éviter l'altération ultérieure de la couleur du produit lors de sa cuisson, en l'occurrence son verdissement, ainsi qu'une altération des matières grasses (rancidité oxydative). En effet, comme il a déjà exposé, les lamelles de foies destructurés sont sujettes à une forte oxydation du fait de la présence de sucres dont la libération résulte de l'éclatement des cellules lors de la destructuration. Par ailleurs, l'augmentation de la surface de contact avec l'air ambiant est également un facteur amplifiant d'une telle oxydation.

Or le malaxage sous vide de ces lamelles avec adjonction de produits à effet de liants permet d'obtenir une pâte très cohérente dépourvue de poches ou de bulles d'air dont la présence aurait été une cause d'oxydation de certains composés contenus dans la globine du foie. En conséquence on évite de la sorte les risques d'oxydation du produit et les inconvénients en résultant, notamment le verdissement du produit après cuisson.

Les additifs à effets de liant qui sont ajoutés lors du malaxage peuvent être de la fécule, du flocon de pomme de terre ou de la gélatine. Eventuellement il serait possible d'ajouter des additifs protéïques ou polyssachariques, tels les malto-dextrines, ou des liants protéïques d'origine végétale comme le soja, ou d'origine animale comme le plasma, amidon, caséïne, blanc d'oeuf.

Lors de l'opération de malaxage sous vide, en plus de produits à effet de liants, on ajoute également des sels nitrités dissous dans du lait. De tels sels ont pour but d'améliorer la coloration rouge/rosée de la pâte obtenue en évitant tout verdissement ultérieur de celle-ci. Quant à la dilution de ces sels dans un liquide (eau ou lait), elle permet d'obtenir une bonne répartition de ceux-ci dans la masse de la pâte. Cependant l'emploi du lait comme liquide de dilution est préférable car le lait constitue, lors de la cuisson ultérieure du produit, un agent renforçateur de la cohésion du produit.

En ce qui concerne l'incorporation de certains produits additifs pendant l'operation de malaxage, des résultats pleinement satisfaisants ont été obtenus avec les exemples suivants :

**Example I**

Adjonction de :
Fecule à sec 30g par Kg de foie
Sel nitrité 7g par Kg de foie

**Example II**

Adjonction de :
Gelatine à sec 30g par Kg de foie
Sel nitrité 5g à 7g par Kg de foie

**Example III**

Adjonction de :
Flocons de pomme de terre 20g à 40g par Kg de foie
Lait demi-écrémé 0,25l par 9 Kg de foie
Sel nitrité 7g par Kg de foie

**5.- Formage :**

La pâte résultant de l'opération précédente est subdivisée en parts individuelles de poids et de volume déterminés et celles-ci sont ensuite moulées dans des moules ayant touts la même forme et le même volume, en l'occurrence la forme et le volume des portions individuelles à réaliser. Cependant, il est bien évident que la forme et le volume de ces moules peuvent varier suivant le choix des fabricants, par exemple pour des raisons d'ordre commercial ou écomonique, ou en fonction de l'évolution du marché.

Cette opération de formage doit être réalisée à une température de l'ordre de _3°C (+ ou -2). En effet, une telle température est nécessaire pour pouvoir obtenir la cohésion voulue des particules du produit, donc une tenue suffisante des portions réalisées.

**6.- Surgélation :**

Sans rupture de continuité avec les opérations précédentes, on procède ensuite à une surgélation consistant en un abaissement thermique rapide aboutissant à une température de -40°C au coeur des portions moulées. Pour la mise en oeuvre de cette opération, il est recommandé d'utiliser des tunnels à azote liquide. Cependant, le matériel de surgélation peut être aussi bien de type linéaire que de type rotatif.

**7.- Emballage et conditionnement :**

Enfin, les portions de foies reconstitués font l'objet d'un conditionnement sous forme d'un emballage dépendant des désirs de la clientèle et du type de commercialisation. Bien entendu, cette opération doit respecter les normes d'hygiène imposées en la matière.

A l'issue de cette opération finale, on obtient donc des portions individuelles reconstitutées de foie qui sont normalisées en poids et en épaisseur, mais dans lesquelles le produit conserve toutes ses qualités initiales d'octuosité, ainsi que ses qualités en matière nutritionnelle et gustative. De plus le produit obtenu présente une coloration rouge/rosé sans risque de verdissement ultérieur lors de la cuisson, et ce grâce à l'absence de bulles d'air incluses, cette absence de bulles d'air étant due à l'opération de malaxage avec adjonction de produits à effet de liants.

En conséquence, la commercialisation d'un tel produit constitue un avantage important non seulement pour les entreprises de commercialisation de viande, mais également pour la clientèle. En effet, celle-ci est en mesure de trouver désormais à sa disposition des portions normalisées dans lesquelles le foie a conservé toutes ses qualités et qui peuvent être stockées sans inconvénient pendant un temps plus ou moins long pour être consommées ultérieurement. Par ailleurs, du fait même de leur normalisation, ces portions peuvent être utilisées avantageusement dans les restaurants de collectivités.

Bien entendu, la présente invention a pour objet, non seulement le procédé de traitement décrit ci-dessus, mais également les portions reconstituées de foie qui résultent de la mise en oeuvre de ce procédé. Celles-ci consistent en des portions individuelles moulées obtenues après destructuration d'un foie animal et reconstitution en portions individuelles par mise en oeuvre du procédé selon l'invention, ces portions normalisées contenant un ou plusieurs produits additifs à affet de liants.

Le procédé selon l'invention peut faire l'objet de plusieurs variantes de mise en oeuvre, notamment les suivantes :

**a.- Adjonction de colorants et/ou d'agents gustatifs :**

Lors de l'opération de malaxage sous vide, il est possible d'ajouter des charges gustatives susceptibles d'être utilisés pour des applications alimentaires. Ainsi, on peut ajouter de la poudre d'oignon, des renforçateurs de goût, des hydrolysats de protéïnes végétales, ou des produits des réactions de Maillard, ou tous autres produits ou additifs.

### b.- Précuisson avant surgélation :

En fonction du mode de présentation prévu, il est possible de réaliser une précuisson de portions obtenues, et ce, entre l'opération de formage de celles-ci et l'opération de surgélation.

Une telle précuisson est alors réalisée en continu par passage dans un four tel que ceux utilisés en biscuiterie, ou par immersion dans un bain d'huile à une température d'environ 175° C, le temps d'immersion étant réglé en fonction du degré de précuisson désiré.

### c.- Panage :

Toujours en fonction du mode de présentation, il est possible de faire subir une opération de panage aux portions moulées et ce, aprés leur formage et leur surgélation. Cette opèration est effectuée en continu comme les précédentes et elle peut être éventuellement suivie d'une opération de précuisson, comme prévu au paragraphe précédent.

### d.- Irradiation :

Pour améliorer la qualité bactériologique du produit, il peut être envisagé de soumettre les portions reconstituées à des radiations ionisantes émises par des rayons gamma du Cobalt 60 ou du Cesium 137 ou par des électrons accélérés.

Cette opération d'irradiation serait alors réalisée après l'opération de conditionnement, donc avant le stockage et l'expédition des portions obtenues par mise en oeuvre du présent procédé.

Du reste, les temps d'exécution des différentes opérations supplémentairs prévues ci-dessus, apparaissent sur la figure unique du dessin annexé qui intègre à la fois les opérations successives constituant la base même du procédé selon l'invention, et celles qui correspondent à diverses variantes possibles d'exécution de ce procédé.

Dans ces variantes, de même que dans la forme particulière de réalisation décrite précédemment en détail, il est prévu une opération de surgélation pour la commercialisation de parts normalisées sous forme surgelée. Cependant, le présent procédé permet également de préparer des parts normalisées de foie destinées à être commercialisées à l'état frais, ou bein encore à l'état cuit :

### 1.- Préparation de parts de foie reconstitué à l'état frais :

A part la suppression de l'opération de surgélation, les différentes opérations sont les mêmes que précédemment et elles sont exécutées sous les mêmes conditions de température.

Pour garantir une date limite de consommation, il est, en outre, nécessaire d'utiliser un ou plusieurs agents conservateurs tels les acides organiques ou leurs sels autorisés. Enfin, il est prudent, pour éviter tout risque de dégradation prématurée, de soigner l'emballage et d'utiliser des méthodes faisant appel au vide ou au vide compensé par addition de gaz neutre.

### 2.- Préparation de parts de foie reconstitué, à l'état cuit :

La cuisson ayant pour but de stabiliser pendant une période relativement courte, l'évolution d'un produit, il est concevable de mettre à la disposition des consommateurs une gamme de produits à base de foie destructuré ayant reçu un traitement thermique.

Cette cuisson peut se faire par passage dans un four continu tel que ceux utilisés en biscuiterie ou par immersion dans un bain d'huile à 175° C pour obtenir un produit frit, ou dans une cellule à vapeur sèche à 80° C environ pour obtenir un produit cuit.

### Revendications

1. Procédé de traitement de foies d'animaux dans le cadre duquel ceux-ci subissent une opération initiale de fragmentation alors qu'ils sont à l'état congelé, ainsi qu'une opération finale de moulage, caractérisé en ce que:

a) l'opération initiale de fragmentation, effectuée à une température de -6° C (+ ou - 2), est suivie d'une opération de coupe des fragments obtenus, et ce sous forme de lamelles ou particules similaires, qui sont maintenues à une température de l'ordre de -5° C (+ ou - 2),

b) on procède ensuite à une opération de malaxage sous vide des particules ainsi obtenues, tout en ajoutant un ou plusiers produits additivs - tels que fécule, gelatine ou flocon de pomme de terre - ayant un effet de liants aptes à éviter la présence de poches ou bulles d'air à l'intérieur de la pâte ainsi obtenue, la température de cette pâte ainsi obtenue, la température de cette pâte étant de -4° C ( + ou - 2),

c) puis après subdivision de cette pâte en parts individuelles de volume déterminé, on effectue le formage de chacune de celles-ci dans des moules de forme voulue, en contrôlant que la température du produit soit de l'ordre de -3°C (+ ou - 2).

2. Procédé de traitement selon la revendication 1, caractérisé en ce que lors de l'opération de malaxage sous vide, on ajoute, en plus d'additifs à effet de liant, des sels nitrités dissous dans du lait.

3. Procédé de traitement selon la revendication 1, caractérisé en ce que lors de l'opération de malaxage sous vide, on ajoute, en plus d'additifs à effet de liant, des sels nitrités dissous dans du lait, ainsi que des agents gustatifs, tels que : poudre d'oignons, renforçateurs de goût, hydrolysats de protéînes végétales.

4. Procédé de traitement selon l'une des revendications précédentes, caractérisé en ce que la première découpe mécanique est réalisée au moyen d'un appareil de type trancheur ou guillotine, qui est apte à découper la matière première en fragments cubiques dont les arêtes ont une longueur de 2 à 5 cm.

5. Procédé de traitement selon l'une des revendications précédentes, caractérisé en ce que l'opération de destructuration est réalisée au moyen d'un appareil de coupe comportant une tête rotative à lames multiples et qui est apte à découper on fines lamelles les fragments de foie résultant de la première opération de découpe mécanique.

6. Procédé de traitement selon l'une des revendications 1 á 5, caractérisé en ce qu' après l'opération de formage et avant une opération finale de surgélation, on procède à une opération de précuisson des portions moulées.

7. Procédé de traitement selon l'une des revendications 1 à 5, caractérisé en ce qu'après l'opération de formage et avant une opération de surgélation, on procède à une opération de panage des portions moulées, cette opération étant éventuellement suivie d'une opération de précuisson.

8. Portions normalisées de foie animal caractérisées en ce qu'elles consistent en des portions individuelles moulées obtenues après destructuration d'un foie animal et reconstitution en portions individuelles par mise en oeuvre du procédé de traitement selon l'une des revendications précédentes, ces portions normalisées contenant un ou plusieurs produits additifs à effet de liant et éventuellement d'autres additifs, tels que des agents gustatifs.

**Claims**

1. A method for treating livers of animals, within the scope of which the livers are subjected to an initial operation of fragmentization while they are in a frozen condition, as well as to a final moulding operation, characterized in that :
   a) the initial operation of fragmentization is carried out at a temperature of -6°C ($\pm$ 2°C), and is followed by a cutting operation of the obtained fragments, in which the fragments are divided into slivers or similar particles which are maintained at a temperature of the order of -5°c ($\pm$ 2°C);
   b) it is subsequently proceeded with a kneading operation under a vacuum carried out on the particles having thus been obtained, while adding one or several additive products such as starch, gelatine or potatoe flakes having an effect as binders capable of avoiding the presence of air pockets or bubbles inside the paste being thus obtained, the temperature of this paste being -4°C ($\pm$ 2°C);
   c) after subdividing this paste into individual portions of a determined volume, the shaping of these portions is carried out in moulds of the desired shape, while checking that the temperature of the product is of the order of -3°C ($\pm$ 2°C).

2. A treating method according to Claim 1, characterized in that, during the kneading operation in a vacuum, there are added, in addition to the additives having a binder effect, nitrite salts dissolved in milk.

3. A treating method according to Claim 1,characterized in that, during the kneading operation in a vacuum, there are added, in addition to the additives having a binder effect, nitrite salts dissolved in milk, and also gustatory agents such as : onion powder, taste enhancers, hydrolysates of vegetable proteins.

4. A treating method according to one of the above Claims, characterized in that the first mechanical cutting operation is carried out by means of an apparatus of the slicer or guillotine type which is adapted for cutting the raw material into cubic fragments, the edges of which have a length from 2 to 5 cm.

5. A treating method according to one of the above Claims, characterized in that the operation for breaking up the structure is carried out by means of a cutting apparatus comprising a rotary head with multiple blades which is adapted for cutting into thin slivers the liver fragments resulting from the first mechanical cutting operation.

6. A treating method according to one of Claims 1 - 5, characterized in that, after the shaping operation and prior to a final deep-freezing operation, there is carried out a precooking operation of the moulded portions.

7. A treating method according to one of Claims 1 - 5, characterized in that after the shaping operation and before one deep-freezing operation, there is carried out an operation for coating the moulded portions with breadcrumbs, this operation being followed - if the case arises - by a precooking operation.

8. Standardized portions of animal liver, characterized in that they consist of individual moulded portions obtained after breaking up the structure of an animal liver and reconstituting it into individual portions by carrying out the treating method according to one of the above Claims, these standardized portions containing one or several additive products acting as binders and - if the case arises - further additives such as gustatory agents.

**Ansprüche**

1. Verfahren zur Behandlung von von Tieren stammender Leber, in dessen Rahmen zunächst ein Fragmentierungsvorgang im erstarrten Zustand und ebenso ein abschließender Vermahlungsvorgang erfolgt, dadurch **gekennzeichnet,** daß
   a) im Anschluß an die bei einer Temperatur von -6°C (± 2K) durchgeführte Fragmentierung ein Schneiden der erhaltenen Fragmente, und zwar in Form von Lamellen oder ähnlichen Teilen und deren Halten bei einer Temperatur von -5°C (± 2K) erfolgt,
   b) danach diese Teile im Vakuum einem Mischen unter Kneten unterworfen werden bei Zusatz von einem oder mehreren Zusatzstoffen, wie Stärke, Gelatine oder Kartoffelflocken, die einen Bindemitteleffekt zur Vermeidung der Anwesenheit von Lunkern oder Luftblasen im Innern der so erhaltenen Masse haben, die eine Temperatur von -4°C (± 2K) aufweist, und

   c) nach Unterteilung der Masse in einzelne Portionen von festgelegtem Volumen deren Formgebung in Formen mit der gewünschten Gestalt vorgenommen wird, wobei die Temperatur des Produkts bei -3°C (± 2K) liegt.

2. Behandlungsverfahren gemäß Anspruch 1, dadurch **gekennzeichnet,** daß man während des Mischens unter Kneten im Vakuum zusätzlich zu den einen Bindemitteleffekt bewirkenden Zusatzstoffen noch in Milch gelöste Nitritsalze zusetzt.

3. Behandlungsverfahren gemäß Anspruch 1, dadurch **gekennzeichnet,** daß man während des Mischens unter Kneten im Vakuum zusätzlich zu den einen Bindemitteleffekt bewirkenden Zusatzstoffen noch in Milch gelöste Nitritsalze sowie Geschmacksmittel zusetzt, wie gemahlene Zwiebeln, Geschmacksverstärker, Hydrolysate von pflanzlichen Proteinen.

4. Behandlungsverfahren gemäß einem der vorangehenden Ansprüche, dadurch **gekennzeichnet,** daß der erste mechanische Zerschneidungsvorgang mittels einer Vorrichtung nach Art einer Schneidemaschine oder Guillotine erfolgt, wobei diese geeignet ist, die Ausgangsmaterie in kubische Fragmente zu zerschneiden, deren Kanten eine Länge von 2 bis 5 cm haben.

5. Behandlungsverfahren gemäß einem der vorangehenden Ansprüche, dadurch **gekennzeichnet,** daß der Zerkleinerungsvorgang bewirkt wird mittels einer Schneidevorrichtung, die einen rotierenden Kopf mit mehreren Klingen trägt und für das Schneiden der beim ersten mechanischen Schneidevorgang angefallenen Leber-Fragmente in dünne Lamellen geeignet ist.

6. Behandlungsverfahren gemäß einem der Ansprüche 1 bis 5, dadurch **gekennzeichnet,** daß nach der Formgebung und vor der abschließenden Tiefkühlung noch ein Vorkochen der geformten Portionen erfolgt.

7. Behandlungsverfahren gemäß einem der Ansprüche 1 bis 5, dadurch **gekennzeichnet,** daß nach der Formgebung und vor der Tiefkühlung noch ein Panieren der geformten Portionen erfolgt, dem ggfls. ein Vorkochen angeschlossen wird.

8. Genormte Portionen von tierischer Leber, dadurch **gekennzeichnet**, daß sie aus einzelnen, zermahlenen Portionen davon bestehen, die erhalten werden durch Zerkleinerung von tierischer Leber und Rekonstituierung in Portionen nach dem Behandlungsverfahren gemäß einem der vorangehenden Ansprüche, wobei die genormten Portionen einen oder mehrere Zusatzstoffe mit einem Bindemitteleffekt und ggfls. andere Zusatzstoffe, wie Geschmacksmittel, enthalten.

```
┌──────────────────┐      ┌──────────────┐      ┌──────────────────┐
│  REDUCTION A LA  │      │  PREDECOUPE  │      │  DESTRUCTURATION │
│    TEMPERATURE   │─────▶│  MECANIQUE   │─────▶│                  │
│   DE TRAVAIL     │      │              │      │                  │
└──────────────────┘      └──────────────┘      └──────────────────┘
                                                          │
                                                          ▼
┌──────────────────┐      ┌──────────────┐      ┌──────────────────┐
│   SURGELATION    │◀─────│   FORMAGE    │◀─────│     MALAXAGE     │
│                  │      │              │      │     MELANGE      │
└──────────────────┘      └──────────────┘      └──────────────────┘
      │    ▲  ▲
      │    │  │          ┌──────────────┐
      │    │  └──────────│  PRECUISSON  │◀───
      │    │             └──────────────┘
      │    │                    ▲
      │    │             ┌──────────────┐
      │    └─────────────│    PANAGE    │───
      │                  └──────────────┘
      │                          ┌──────────────────┐
      │                          │ IRRADIATION  PAR │
      │                          │ RAYONS IONISANTS │
      │                          └──────────────────┘
      │                                   ┊
      ▼                                   ▼
┌──────────────────┐              ┌──────────────────┐
│ CONDITIONNEMENT  │─────────────▶│     STOCKAGE     │
│                  │              │    EXPEDITION    │
└──────────────────┘              └──────────────────┘
```